# EUROPEAN PATENT SPECIFICATION

(11) **EP 1 446 018 B1**
(45) Date of publication and mention of the grant of the patent: **10.12.2008**
(21) Application number: 02787534.3
(22) Date of filing: 31.10.2002
(51) Int. Cl.: A23D 7/00, A23D 7/015

(54) **WATER CONTINUOUS ACIDIFIED FOOD PRODUCT**
GESÄUERTES NAHRUNGSMITTELPRODUKT MIT KONTINUIERLICHER WASSERPHASE& x9;
PRODUIT ALIMENTAIRE ACIDIFIÉ À PHASE AQUEUSE CONTINUE

(30) Priority: 23.11.2001 EP 01204517
(43) Date of publication of application: 18.08.2004
(73) Proprietor: Unilever N.V., 3133 AT Vlaardingen (NL); Unilever PLC, London Greater London EC4P 4BQ (GB)
(72) Inventor: BOT, Arjen, Unilever R & D Vlaardingen, NL-3133 AT Vlaardingen (NL); FOSTER, Timothy, John, Unilever R & D Colworth, Sharnbrook, Bedfordshire MK44 1LQ (GB); LUNDIN, Leif,Orjan, Unilever R & D Colworth, Sharnbrook, Bedfordshire (GB); PELAN, Barbara, M. C., Unilever R & D Vlaardingen, NL-3133 AT Vlaardingen (NL); REIFFERS, Christel, Unilever R & D Vlaardingen, NL-3133 AT Vlaardingen (NL)
(74) Representative: Joppe, Hermina Laura Petronella
(86) International application number: PCT/EP2002/012180
(87) International publication number: WO 2003/043430

(56) References cited:
- EP-A- 0 276 517
- EP-A- 0 540 085
- EP-A- 0 864 255
- WO-A-96/03888
- WO-A-97/04660
- WO-A-97/08956
- DE-A- 3 907 676
- IDRIS NOR AINI ET AL.: "Chemical composition and physical properties of soft (tub) margarines sold in Malaysia. " JOURNAL OF THE AMERICAN OIL CHEMISTS' SOCIETY , vol. 73, no. 8, 1996, XP002231189
- [Online] Retrieved from the Internet: URL:http://en.wikipedia.org/wiki/maltodext rin> [retrieved on 2007-02-16]

## Description

### Field of the invention

The invention relates to a water continuous spreadable acidified food product suitable for use as a table spread which product comprises a fat phase consisting at least partly of vegetable oil or marine oil, biopolymer, protein and optionally further ingredients.

### Background to the invention

Water continuous spreads have been described in WO-A-97/04660 which discloses a creamy, cultured dairy based water continuous spread comprising less than 35% fat, up to 4.5% milk protein, gelatin or a gelatin replacer, the spread having a pH value between 4.6 and 5.2, and the spread having a butter-like mouthfeel, texture and taste.

Such spreads are popular for use as an underlayer on bread but are also consumed as such on toast and the like. These spreads in some aspects resemble well known fresh cheese and other dairy products.

Both the protein and the dairy fat contribute to the texture in these spreads, and it is possible to obtain products with the same firmness for different combinations of protein and fat concentrations. For dairy fat-based compositions, the high-protein / low-fat combinations are usually the most cost-effective solution to achieve maximal firmness. For compositions based on commonly used vegetable fat such as those disclosed in WO-A-97/08956, the situation is generally opposite: in those products the cost-effective solutions tend to be the low-protein / high-fat formulations, because at current market prices dairy fat is much more expensive than most commonly used vegetable fats.

Improvement of firmness and texture of water continuous, oil containing spreads has been subject of many publications.

EP-A-864255 discloses very low fat spreads comprising a high amount of a fructo-oligosaccharide (from 1 to 20 wt%) leading to products where structure is given at least partly by this biopolymer. Such high levels however may influence the mouthfeel of these products negatively.

DE 3907 676 A discloses low fat water continuous margarine comprising kappa-carrageenan and starch, furthermore comprising maltodextrin.

It is further for example well known that increase of fat content will lead to harder products (Jost et al., J. Food Sci. 51, 440, 1986; van Vliet, Coll. Polym. Sci. 266, 518, 1988; Langley and Green, J. Text. Studies. 20, 191, 1989; Xiong et al., J. Food Sci. 56, 920, 1991; Yost and Kinsella, J. Food Sci. 58, 158, 1993). The fat in these products plays a similar role as the 'filler phase' in a composite material. The effect of a fat droplet filler phase becomes more effective at higher filling fractions.

However the increase of the fat content is in many cases undesired as large groups of consumers nowadays prefer food products which are reduced fat compared to for example margarine but which still show the advantages of the high fat products. At these low filler fractions, however the contribution of the filler fraction to the firmness of the product is modest.

It is therefore an object of the current invention to provide a water continuous food product which contains a reduced amount of fat, i.e. from 5 to 40 wt% fat, the right balance of protein and biopolymer to obtain a creamy mouthfeel, but for which the product firmness can be easily adjusted.

### Summary of the invention

It has surprisingly been found that those water continuous products that are based on a phase separated water phase comprising a biopolymer phase and a protein phase and that show a specific ratio between the volume fraction of the dispersed fat phase and the volume fraction of the protein phase, will meet at least part of the above objectives, especially in terms of firmness while using only a limited amount of fat.

Therefore the invention relates to a food product comprising a dispersed oil phase and a continuous aqueous phase said product comprising from 5 to 40 wt% fat, said fat being either a vegetable oil or marine oil or a combination thereof; or a combination of a dairy fat and a vegetable oil or marine oil wherein the amount of dairy fat is below 45% of the total fat, from 0.05 to 15 wt% protein, 0.01 to 3 wt% biopolymer wherein the biopolymer is selected from the group consisting of locust bean gum , guar gum, tara gum, amylopectin, methylcellulose, alginate, starch, modified starch, high molecular weight pectin or combinations thereof, said food product having a pH value between 3.7 and 5.8, preferably between 4.2 and 5.8, wherein the food product comprises a phase separated water phase comprising a biopolymer phase and a protein phase, wherein the volume fraction of the dispersed oil phase divided,by the volume fraction of the protein phase is at least 0.2, preferably at least 0.25, more preferably at least 0.3, obtainable by the process as described herein.

The invention relates to spreadable food products. Spreadable is defined as being easily spread with a knife on a substrate such as bread, without tearing the bread at the ambient temperature of the product during spreading. The products preferably are characterised by a Stevens hardness value hardness at 10°C of about 40-700 g and of about 40-250 g at 20°C. The method to determine Stevens hardness is described in the examples. Preferred products show a Stevens hardness of from 50 to 500 g, more preferred 100 to 500 g at 5 °C and from 50 to 250 g at 20 °C.

In the description and claims where weight% is used this is weight% on total product weight unless otherwise is indicated.

In the description and claims the terms "oil" and "fat" are used interchangeably.

Volume fractions are defined on total product volume unless otherwise is indicated.

In the context of the invention protein phase is defined as the protein rich part of the water phase that has formed upon phase separation. In the context of the invention the products may comprise more than one protein enriched phase which can be separated due to physical barrier or may differ in type of protein. In the below the combination of protein phases is referred to as "the" protein phase.

In the context of the invention the biopolymer phase is defined as the protein depleted part of the water phase that has formed upon phase separation. Depending on the composition of the water phase more than one biopolymer phase may form. For the purpose of the invention the combination of biopolymer phases is referred to as "the" biopolymer phase.

The invention relates to water continuous spreads containing a dispersed oil phase.
Firmness of these products is defined in terms of the so called Stevens hardness as mentioned above. The method to determine Stevens hardness is described in the examples.

It is well known that aqueous compositions comprising both proteins and biopolymers such as polysaccharides can present a phase separation. This means that above a certain concentration they no longer form a homogeneous mixture in aqueous medium but separate spontaneously in two phases; one phase enriched in biopolymers and one phase enriched in protein. The two phases can be quantified by centrifugation of a sample containing both ingredients in an aqueous medium.
Hence preferred products are those wherein the biopolymer and protein are thermodynamically incompatible compounds in an aqueous medium.

The products according to the invention comprise a phase separated water phase comprising a biopolymer phase and a protein phase. Without wishing to be bound by any theory it is believed that the protein is present in the form of an acidified protein network containing protein coated fat droplets which are the dispersed phase. The biopolymer phase is separately present and preferably forms the remainder of the aqueous phase.

The products according to the invention comprise a dispersed fat phase. Without wishing to be bound by any theory it is believed that in the products according to the invention, the fat droplets are coated by protein and hence will mimic protein particles in many aspects. When studied under a microscope the products according to the invention preferably show a continuous aqueous phase in which a fat phase is dispersed in the form of fine droplets that are preferably at least partly coated with protein. Preferably at least 75% vol% , more preferred at least 90 vol% of the fat droplets is in the protein phase.
Optionally part of the fat droplets is located at the interface between the protein phase and the biopolymer phase. Occasionally some fat droplets will be found in the biopolymer phase.
Most preferred essentially all of the fat droplets are within the protein phase.

Without wishing to be bound by any theory, it is believed that the phase separation leads to a concentration of the fat droplets in the protein phase. This concentration in turn enables a high influence of fat composition, especially in terms of solids, on the final product firmness.
Therefore the volume fraction of the dispersed oil phase divided by the volume fraction of the protein phase is at least 0.2, preferably at least 0.25, more preferably at least 0.3.

According to an even more preferred embodiment the volume fraction of the dispersed oil phase divided by the volume fraction of the protein phase is at least 1, more preferred from 1 to 2, most preferred from 1.2 to 2 when measured in the final product under acidic conditions (pH less than 6).

The average diameter D₃,₃ of the fat droplets is preferably from 0.1 to 20 µm, more preferred from 0.5 to 5 µm with sigma less than 1, more preferred from 0.1 to 0.8. It is believed that the smaller the average diameter, the firmer the product will be.

The combination of a phase separated water phase with a dispersed fat phase of which the majority is present in only one of the two phases was found to lead to products for which the firmness is easily adjusted.

In the products according to the invention the biopolymer is present in the form of a biopolymer phase. Preferably the volume fraction of the biopolymer phase is from 0.2 to 0.5.

For the purpose of the invention the term biopolymer is defined such that it does not encompass protein. The biopolymer is selected from those biopolymers which phase separate with protein in an aqueous medium under the conditions of the current food product.
It will be appreciated that the selection of such biopolymer will depend on the protein that is applied. In general the following biopolymers tend to phase separate with protein in aqueous medium. Therefore the biopolymer is selected from this group comprising locust bean gum , guar gum, tara gum, amylopectin, methylcellulose, alginate, starch, modified starch, high molecular weight pectin or combinations thereof.
preferably the biopolymer is selected from the group comprising locust bean gum , guar gum, tara gum, methylcellulose, alginate, or combinations thereof.

The concentration of biopolymer in food product according to the invention is from 0.01 to 3 wt%, preferably from 0.1 to 1.5 wt%. It will be appreciated that each individual biopolymer will have its own optimal concentration which may depend on other characteristics of the food product such as the protein source, pH and salt content.
For example if locust bean gum is applied in combination with butter milk powder at a concentration of from 5 to 12 wt%, the concentration is preferably from 0.15 to 0.45 wt%.

The protein is preferably selected from the group of comprising milk protein, soy protein, pea protein or combinations thereof. The use of milk protein as at least part of the protein is highly preferred because of the positive effect of milk protein on the taste and flavour of the final product.

Suitable sources of milk protein are for example selected from the group comprising milk, skimmed milk powder, butter milk powder, butter serum powder, whey powder, whey powder, whey protein concentrate, whey protein isolate, caseinate. The most preferred protein is protein originating from butter milk because of its superb taste and flavour contribution.

The amount of protein is from 0.05 to 15 wt%, preferably from 2 to 10 wt%, more preferred from 2 to 6 wt%. In general the lowest possible protein concentration is most advantageous because of cost reasons.

The products according to the invention comprise from 5 to 40 wt% fat. Preferred products comprise 15 to 35 wt%, more preferred from 20 to 35 wt% fat.

The fat is either a vegetable oil or marine oil or a combination thereof; or a combination of a dairy fat and a vegetable oil or marine oil.

If dairy fat is used, the amount is preferably below 45% of the total fat. It has surprisingly been found that the firmness of the products can be adjusted accurately by adjusting the solids content of the fat. On the basis of generally known principles of the mechanical properties of composite materials, it was expected that the known measures of increase of fat content and protein content would influence the firmness of the final product. The unexpected large effect of solid fat content in the dispersed phase is surprisingly higher under the conditions of phase separation and phase volume of fat to protein in accordance with the current invention.

Preferably the solids content of the fat or fat blend that forms the dispersed phase is from 5 to 95% at 10 °C, from 1 to 50% at 20 °C and from 0 to 10% at 35 °C. More preferred the solids content is from 25 to 75% at 10 °C, from 7.5 to 35 at 20° C and from 0 to 5% at 35° C. Even more preferred the solids content is from 60 to 75% at 10 °C, from 10 to 35% at 20° C and from 0 to 5% at 35° C.

Even more preferred the same profile of solid fat is determined for the isolated fat phase of the product after it has been removed from the product. The method to determine solid fat content and the method to isolate the dispersed fat phase from the other ingredients of the product is disclosed in the example.

The above solid fat profile can be obtained by a variety of fats or combination of fats in a fat blend. The fat is preferably selected from the group comprising coconut oil, palm oil, palm kernel oil, soybean oil, rapeseed oil, sunflower oil, safflower oil, or fully or partially hardened fractions thereof.

More preferably the fat is selected from the group comprising coconut oil, hardened coconut oil, palm oil fractions or a combination thereof.
Optionally the fat is an interesterified fat blend. In a further preferred embodiment, the total amount of saturated fatty acid components in the fat is less than 45 wt%, based on the total amount of fatty acid components, and further preferred less than about 30 wt%.

Optionally the products according to the invention comprise emulsifier. For the purpose of the invention the term emulsifier does not encompass protein. However very high amount of emulsifier are preferably avoided as this could lead to a change in texture in terms of the contribution of the fat droplets to firmness of the product. Preferably the amount of emulsifier is below 1.3 wt%, more preferred below 1 wt%, even more preferred below 0.5%. Most preferred the product is essentially free of emulsifier. Suitable emulsifiers are for example monoglycerides (saturated or unsaturated), diglycerides, phospholipids such as lecithin, Tween^{tm}, (sorbitan monostearate).

Optionally, usual additives for emulsions such as salt, herbs, spices, flavours, colouring matter, preservatives and the like may be added, although it is believed that for obtaining a suitable underlayer none of these is needed.

Normally, for use as a spread at least some salt will be present. The amount of salt may vary depending on the consumer preference in a specific country, but amounts between 0.2 and 1.5 wt% are generally recommended. The preferred salt is sodium chloride.

The products have a pH between about 3.7 and 5.8, preferably 4.2 to 5.8, more preferably between 4.5 and 5.2, and most preferred between 4.6 and 5.0.
Acidification of the starting ingredients to this pH can be obtained by any suitable method such as microbial acidification or chemical acidification for example using glucono deltalactone or another acidifying agent. The pH can be further adjusted by the use of a base such as sodium hydroxide.

For obtaining further improved spreadability and mouthfeel, in one embodiment of this invention preferably some gelatin will be present. The product preferably comprises at least 0.5 wt% gelatin (based on total weight of the product), and further preferred at least 0.6 wt%. No further beneficial effect was observed for levels above 2%, compared to 2% levels. It was found that if gelatin of a bloom strength of 250 is used, the best products are obtained if 0.8 - 1.2 wt% gelatin is used, based on fat free material. Preferred is to use 1.1 wt% gelatin. If gelatin of another bloom strength is used, other weight ranges are applied providing an equivalent structuring performance.
As these days it is sometimes desired to have no gelatin present in consumer products, a specific embodiment of this invention allows that instead of gelatin, a so called gelatin replacer is used. Gelatin replacers are components or compositions which have similar mouthfeel behaviour, and similar performance, such as water binding and melting properties compared with gelatin. Examples of suitable gelatin replacers are described in, inter alia, European Patent Application EP 496466 and in EP 474299 and are often very specific or specifically treated components or compositions.

The product according to the invention optionally comprises other ingredients such as herbs, flavour or colour components, gelatin.

It is also an object to provide a mildly, neutral tasting product having a closed keepability of several weeks. In a preferred embodiment, the products of the invention have a closed keepability of 8 weeks or more, which means that no change of taste and structure occurs on storage for such a period.

In a further aspect the invention relates to a process for the preparation of the above products. Any suitable process can be used provided that in at least one stage of the process phase separation between the protein phase and the biopolymer phase is obtained.

Therefore the invention also relates to a process for the preparation of a food product comprising a dispersed oil phase and a continuous aqueous phase said product comprising from 5 to 40 wt% fat, said fat being either a vegetable or marine fat or a combination thereof; or a combination of a dairy fat and a vegetable or marine fat, from 0.05 to 15 wt% protein in the form of a protein phase, 0.01 to 3 wt% biopolymer, having a pH value between about 3.7 and 5.8, preferably 4.2 and 5.8, said process comprising the steps of:
a) preparation of an aqueous phase comprising protein and biopolymer
b) mixing the aqueous phase with a fat phase at a temperature of a about 40 to 70 °C
c) heating the mixture obtained in step (b) for pasteurisation or sterilisation
d) homogenisation of the mixture of step (c) at a pressure of between 100 and 400 bar, preferably at a temperature above the melting point of the fat
e) acidification to a pH from about 3.7 to 5.8, preferably 4.2 to 5.8
f) homogenisation at a pressure of between 100 and 400 bar preferably at a temperature above the melting point of the fat.

Preferably during at least one stage of the process the biopolymer and protein phase separate .

The phase separation is preferably obtained by maintaining the pH in step (a) to (e) at from 5.2 to 8, preferably from 6.0 to 7.0. The optimal pH was found to be dependent among others on the isoelectric point of the protein. Phase separation is therefore preferably obtained at a pH above this point because at lower pH precipitation of the protein may result, especially at specific temperatures. An average isoelectric point is about 5.2. The pH may optionally be set higher than pH 8.

In case the products are acidified microbiologically it is preferred that the cultures are made inactive after the acidification. The product of the invention can contain some spore formers which are not destroyed by pasteurization, but cannot grow under the chilled storage conditions used for the presently claimed products. Furthermore in case of microbiological acidification it is preferred that after step d) the composition is set to a temperature of from 5 to 50 °C.

After step (f) the products may be filled in containers either before or after including a cooling step to a temperature of from 5 to 10 °C.

For obtaining an increased closed keepability the product is filled into containers while at a temperature in excess of 65°C which containers then are hermetically sealed. By filling at a temperature in excess of 70°, a still better keepability is obtainable. By this higher temperature, the shelf life of the product in the closed container can be 8 weeks or even more.

In the process, acidifying and homogenization as indicated in step can be carried out in any order. It is preferred to homogenize at a temperature above 60°C.
The homogenisation in step (d) and (f) can be combined into one homogenisation step which is either carried out before or after acidification. The separation in two homogenisation steps is preferred.

According to another embodiment of the invention the food product is prepared in a process wherein at least part of and preferably all of the biopolymer is added after acidification.

In another aspect the invention relates to use of a fat which is at least partly crystallised at a temperature between 0 to 40 °C, to increase the firmness of an oil in water emulsion with 5 to 40 wt% fat.

According to the explanation provided above, it was surprisingly found that oil in water emulsions comprising a fat blend which is at least partly crystallised under the product's conditions, increases the firmness of the product, compared to a fat blend which is a liquid oil; i.e. which does not show crystallisation at any of the temperatures between 0 and 40 °C.

Also it was unexpectedly found that increasing the solid fat content of the dispersed fat phase in oil in water emulsions comprising from 5 to 40 wt% increases the firmness of the products.

The fats that are at least partly crystallised at a temperature between 0 and 40 °C are preferably vegetable fats or comprise a combination of vegetable fat and dairy fat. Most preferred the solids content of the fat or fat blend that forms the dispersed phase is from 5 to 95% at 10 °C, from 1 to 50% at 20 °C and from 0 to 10% at 35 °C. More preferred the solids content is from 25 to 75% at 10 °C, from 7.5 to 35% at 20° C and from 0 to 5% at 35° C. Even more preferred the solids content is from 60 to 75% at 10 °C, from 10 to 35 at 20° C and from 0 to 5% at 35° C.

### Examples

General

### Method to determine D₃,₃

The fat droplet size was measured using a well known low resolution NMR measurement method. Reference is made to Goudappel, G.J.W. et al; Journal of colloid and interface science 239, 535-542 (2001).

### Method to determine solid fat content

The solid fat content (%) can be measured by a suitable analytical method such as NMR. The method used is low resolution NMR with Bruker Minispec apparatus. Reference is made to the Bruker minispec application notes 4,5 and 6.

The percentage of solid fat determined by the low resolution NMR technique is defined as the ratio of the response obtained from the hydrogen nuclei in the solid phase and the response arising from all the hydrogen nuclei in the sample. The product of this ratio and one hundred is termed the low resolution NMR solids percent. No correction is made for variations in the proton density between solid and liquid phase. The NMR solids percent for a sample measured at t °C was given the symbol Nₜ.

Suitable instruments adapted to determine the solids fat content are the Bruker Minispecs p20i^{tm}, pc20^{tm}, pc120^{tm}, pc120S^{tm}, NMS120^{tm} and MQ20^{tm}.

Stabilization and tempering procedure was as follows:
- melt fat at 80 °C
- 5 minutes at 60 °C
- about 1 day at 0 °C
- 30-35 minutes at each chosen measuring temperature.

### Determination of phase separation

The preferred method is the method where phase separation is determined under acidic conditions in the final product. According to this method product was poured into tubs and centrifuged at about 1.000 to 5.000 g at 30 °C until phase separation was complete. The preferred force is around 3.000 g.

In an alternative embodiment the aqueous phase comprising biopolymer and protein , before acidification under neutral conditions, was poured in tubes that were centrifuged at 50°C for 2 h at a speed of 1053 rpm using a Gerber centrifuge.

For each method phase volumes for upper biopolymer-rich and lower protein-rich phase were quantified for each tube.

### Protein analysis in biopolymer and protein phases

The protein content of the LBG and protein phases after centrifugation was analysed using the Kjeldahl method.

### Stevens hardness

The firmness of the products is determined by measuring the force required to penetrate a cylindrical probe in the product. Sample height 5 cm; cylindrical probe of 0.5 inch thickness; compression rate 2 mm/s; penetration depth 20 mm. The samples are stored for 7 days at 5 °C, and stored at 5, 10, 20, 25, or 35 °C for 4 h before the firmness measurement.

**Table 1 : Compositions**

| **Wt % on Ingredient** | **product** |
|---|---|
| Fat | 25.0 |
| Butter Milk Powder (BMP) | 10.0 |
| Locust Bean Gum (LBG) | 0.3 |
| Gelatin | 0.7 |
| Salt | 0.3 |
| Lactic acid (LA 88% pure) | 0.58 |
| Demineralised water | Up to 100% |

The fat type varied for example 1-4

### Example 1:

Fat blend: sunflower oil; N line:
Solids content at 10 °C (N10): 0
Solids content at 20 °C (N20): 0
Solids content at 35 °C (N35): 0

### Example 2

Fat blend: mixture of sunflower oil, hardened coconut oil and a palm oil fraction; N line:
Solids content at 10 °C (N10): 25.6
Solids content at 20 °C (N20): 7
Solids content at 35 °C (N35): 0

### Example 3

Fat blend: mixture of hardened coconut oil and a palm oil fraction; N line:
Solids content at 10 °C (N10): 64.9
Solids content at 20 °C (N20): 12.5
Solids content at 35 °C (N35): 0.3

### Example 4

Fat blend according to example 2 but containing 15% BMP at constant LBG level.

### Process

Water phase and fat phase ingredients except for acids were mixed at about 60 °C. After mixing the composition was pasteurized at 85°C for 10 minutes, and cooled down to 44°C, after which homogenisation at 200 bar took place. To the homogenized composition acid was added, until a pH of about 4.8 was reached. Followed by heating the mixture to 85 °C. The obtained product was homogenized at 300 bar, and subsequently heated to a temperature of 75°C for filling the small containers. The product was cooled down to below 10°C and stored at chill temperature.

### Results:

| Parameter | Example 1 | 2 | 3 | 4 |
|---|---|---|---|---|
| Stevens value at 5 °C | 74.5 | 203.5 | 278.8 | 262.0 |
| Phase volume oil phase (Po) | 0.25 | 0.25 | 0.25 | 0.25 |
| Phase volume protein phase (PP) | About 0.14^{a} 0.375^{b} | About 0.14 ^{a} 0.375 ^{b} | About 0.14 ^{a} 0.375 ^{b} | About 0.21 ^{a} 0.44 ^{b} |
| Po divided by Pp ^{c} | About 1.8 | About 1.8 | About 1.8 | About 1.2 |

| | | | | |
|---|---|---|---|---|
| - a: determined with preferred method under acidic conditions. - B: determined under neutral conditions, before acidification - C: determined using value (a). | | | | |

It is clear from the above data that the increase of solids content of the fat blend in ex 1-3 leads to increased products firmness.

### Example 5

A product was prepared according to the process of example 1-4.

### Composition (wt%):

- 0.45% whey protein from 3.0% Sweet Whey Powder (powder contained 15% protein)
- 4.68% soy protein from 5.5% Soy Protein Isolate (powder contained 85% protein)
- 0.7% guar powder
- 26% fat

Fat blend was a blend of sunflower oil and an interesterified blend of palm oil and palm kernel oil:

| T (°C) | Solid Fat Content (%) |
|---|---|
| 5 | 25.2 |
| 10 | 22.9 |
| 15 | 18.5 |
| 20 | 14.2 |
| 25 | 10.6 |
| 30 | 7.9 |
| 35 | 4.9 |
| 40 | 2.0 |
| 45 | 0.0 |
| 50 | 0.0 |

The resulting product showed a Stevens firmness at 5°C: 186 +/-15 g.

### Phase volume distribution:

- protein: about 0.2 when determined under acidic conditions with preferred method and about 0.41 protein phase volume when determined under neutral conditions.
- thickener: 0.33
- fat: 0.26
- The ratio of phase volume of oil phase to protein phase was about 1.3.

### Example 6

Composition:

| Ingredient | Example 6 | 7 | 8 |
|---|---|---|---|
| Fat (mixture of palm oil and coconut oil) | 22 | 27 | 8 |
| Milk protein (skim milk powder and whey protein isolate, whey protein to casein ratio is about 1) | 3.43 | 5.13 | 6.6 |
| Locust bean gum | 0.3 | 0.24 | 0.3 |
| salt | 0.3 | 0.3 | 0.3 |
| Potassium sorbate | 0.1 | 0.1 | 0.1 |
| acid | To pH 4.8 | To pH 4.8 | To pH 4.8 |
| water | Up to 100wt% | Up to 100 wt% | Up to 100 wt% |

### Results:

Phase volume oil phase divided by protein phase:
Example 6: about 2
Example 7: about 1.8
Example 8: about 0.3

Stevens value at 5 °C:
Example 6: 156 g
Example 7: 609 g
Example 8: below 40 g

## Claims

1. Food product comprising a dispersed oil phase and a continuous aqueous phase, said product comprising from 5 to 40 wt% fat, said fat being either a vegetable oil or marine oil or a combination thereof; or a combination of a dairy fat and a vegetable oil or marine oil wherein the amount of dairy fat is below 45% of the total fat, from 0.05 to 15 wt% protein, 0.01 to 3 wt% biopolymer wherein the biopolymer is selected from the group consisting of locust bean gum , guar gum, tara gum, amylopectin, methylcellulose, alginate, starch, modified starch, high molecular weight pectin or combinations thereof, said food product having a pH value between 3.7 and 5.8, preferably between 4.2 and 5.8, wherein the food product comprises a phase separated water phase comprising a biopolymer phase and a protein phase, wherein the volume fraction of the dispersed oil phase divided by the volume fraction of the protein phase is at least 0.2, preferably at least 0.25, more preferably at least 0.3, obtainable by the process according to any one of claims 9 to 12, wherein wt% is based on total product weight and volume fraction is based on total product volume

2. Food product according to claim 1 wherein the biopolymer is present in the form of a biopolymer phase and wherein the volume fraction of the biopolymer phase is from 0.2 to 0.5.

3. Food product according to any of claims 1-2 wherein the volume fraction of the dispersed oil phase divided by the volume fraction of the protein phase is at least 1, more preferred from 1 to 2, most preferred from 1.2 to 2.

4. Food product according to any of claims 1-3 wherein the biopolymer and protein are thermodynamically incompatible compounds in an aqueous medium.

5. Food product according to any of claims 1-4 wherein the protein is selected from the group comprising milk protein, soy protein, pea protein or combinations thereof.

6. Food product according to any of claims 1-5 wherein the amount of fat is from 15 to 35 wt%, more preferred from 20 to 35 wt%.

7. Food product according to any of claims 1-6 wherein the fat phase after isolation from the product is **characterised by** a solids content of from 60 to 75% at 10 °C, from 10 to 35% at 20° C and from 0 to 5% at 35° C.

8. Food product according to claim 7 wherein the fat is selected from the group comprising coconut oil, hardened coconut oil, palm oil fractions or a combination thereof.

9. Process for the preparation of a food product comprising a dispersed oil phase and a continuous aqueous phase, said product comprising from 5 to 40 wt% fat, said fat being either a vegetable or marine fat or a combination thereof; or a combination of a dairy fat and a vegetable or marine fat, wherein the amount of dairy fat is below 45% of the total fat, from 0.05 to 15 wt% protein in the form of a protein phase, 0.01 to 3 wt% biopolymer wherein the biopolymer is selected from the group consisting of locust bean gum , guar gum, tara gum, amylopectin, methylcellulose, alginate, starch, modified starch, high molecular weight pectin or combinations thereof, having a pH value between 3.7 and 5.8, preferably 4.2 and 5.8, said process comprising the steps of:
a) preparation of an aqueous phase comprising protein and biopolymer
b) mixing the aqueous phase with a fat phase at a temperature of about 40 to 70 °C
c) heating the mixture obtained in step (b) for pasteurisation or sterilisation
d) homogenisation of the mixture of step (c) at a pressure of between 100 and 400 bar, preferably at a temperature above the melting point of the fat
e) acidification to a pH between 3.7 and 5.8, preferably 4.2 to 5.8
f) homogenisation at a pressure of between 100 and 400 bar preferably at a temperature above the melting point of the fat, wherein wt% is based on total product weight and volume fraction is based on total product to volume

10. Process according to claim 9 wherein during at least one stage of the process the biopolymer and protein phase separate.

11. Process according to claim 10 wherein phase separation is obtained by maintaining the pH in step (a) to (e) at from 5.2 to 8, preferably from 6.0 to 7.0.

12. A food product according to any of claims 1-8 wherein the fat is at least partly crystallised at a temperature between 0 to 40 °C, to increase the firmness of the oil in water emulsion with 5 to 40 wt% fat.

## Patentansprüche

1. Nahrungsmittelprodukt, das eine dispergierte Ölphase und eine kontinuierliche wässrige Phase umfasst, wobei das Produkt umfasst 5 bis 40 Gew.-% Fett, wobei das Fett entweder ein Pflanzenöl oder ein marines Öl oder eine Kombination davon oder eine Kombination aus einem Milchfett und einem Pflanzenöl oder marinen Öl, in der die Menge an Milchfett unter 45 % des gesamten Fetts liegt, ist, 0,05 bis 15 Gew.-% Protein, 0,01 bis 3 Gew.-% Biopolymer, wobei das Biopolymer ausgewählt ist aus der Gruppe, bestehend aus Johannisbrotkerngummi, Guargummi, Taragummi, Amylopektin, Methylcellulose, Alginat, Stärke, modifizierter Stärke, Pektin mit hohem Molekulargewicht oder Kombinationen davon, wobei das Nahrungsmittelprodukt einen pH-Wert zwischen 3,7 und 5,8, vorzugsweise zwischen 4,2 und 5,8 hat, wobei das Nahrungsmittelprodukt eine phasengetrennte Wasserphase umfasst, welche eine Biopolymerphase und eine Proteinphase umfasst, wobei die Volumenfraktion der dispergierten Ölphase dividiert durch die Volumenfraktion der Proteinphase wenigstens 0,2, vorzugsweise wenigstens 0,25, bevorzugter wenigstens 0,3, ist, das durch das Verfahren nach einem der Ansprüche 9 bis 12 erhältlich ist, wobei Gewichtsprozent auf das gesamte Produktgewicht bezogen ist und Volumenfraktion auf das gesamte Produktvolumen bezogen ist.

2. Nahrungsmittelprodukt nach Anspruch 1, wobei das Biopolymer in der Form einer Biopolymerphase vorliegt und wobei die Volumenfraktion der Biopolymerphase 0,2 bis 0,5 ist.

3. Nahrungsmittelprodukt nach einem der Ansprüche 1 bis 2, wobei die Volumenfraktion der dispergierten Ölphase dividiert durch die Volumenfraktion der Proteinphase wenigstens 1, bevorzugter von 1 bis 2, am bevorzugtesten von 1,2 bis 2 ist.

4. Nahrungsmittelprodukt nach einem der Ansprüche 1 bis 3, wobei das Biopolymer und das Protein thermodynamisch inkompatible Verbindungen in einem wässrigen Medium sind.

5. Nahrungsmittelprodukt nach einem der Ansprüche 1 bis 4, wobei das Protein ausgewählt ist aus der Gruppe, umfassend Milchprotein, Sojaprotein, Erbsenprotein und Kombinationen davon.

6. Nahrungsmittelprodukt nach einem der Ansprüche 1 bis 5, wobei die Menge an Fett 15 bis 35 Gew.-%, bevorzugter 20 bis 35 Gew.-%, ist.

7. Nahrungsmittelprodukt nach einem der Ansprüche 1 bis 6, wobei die Fettphase nach Isolierung aus dem Produkt durch einen Feststoffgehalt von 60 bis 75% bei 10 °C, von 10 bis 35% bei 20 °C und von 0 bis 5% bei 35 °C gekennzeichnet ist.

8. Nahrungsmittelprodukt nach Anspruch 7, wobei das Fett ausgewählt ist aus der Gruppe, umfassend Kokosnussöl, gehärtetes Kokosnussöl, Palmölfraktionen und eine Kombination davon.

9. Verfahren für die Herstellung eines Nahrungsmittelproduktes, das eine dispergierte Ölphase und eine kontinuierliche wässrige Phase umfasst, wobei das Produkt umfasst 5 bis 40 Gew.-% Fett, wobei das Fett entweder ein Pflanzen- oder ein marines Fett oder eine Kombination davon oder eine Kombination aus einem Milchfett und einem Pflanzen- oder marinen Fett, in der die Menge an Milchfett unter 45% des gesamten Fetts liegt, ist, 0,05 bis 15 Gew.-% Protein in der Form einer Proteinphase, 0,01 bis 3 Gew.-% Biopolymer, wobei das Biopolymer ausgewählt ist aus der Gruppe, bestehend aus Johannisbrotkerngummi, Guargummi, Taragummi, Amylopektin, Methylcellulose, Alginat, Stärke, modifizierter Stärke, Pektin mit hohem Molekulargewicht oder Kombinationen davon, das einen pH-Wert zwischen 3,7 und 5,8, vorzugsweise zwischen 4,2 und 5,8 hat, wobei das Verfahren die folgenden Schritte umfasst:
a) Herstellung einer wässrigen Phase, die Protein und Biopolymer umfasst,
b) Mischen der wässrigen Phase mit einer Fettphase bei einer Temperatur von etwa 40 bis 70 °C,
c) Erwärmen des in Schritt b) erhaltenen Gemisches zur Pasteurisierung oder Sterilisation,
d) Homogenisierung des Gemisches von Schritt c) bei einem Druck zwischen 100 und 400 bar, vorzugsweise bei einer Temperatur über dem Schmelzpunkt des Fettes,
e) Ansäuern auf einen pH zwischen 3,7 und 5,8, vorzugsweise 4,2 bis 5,8,
f) Homogenisierung bei einem Druck zwischen 100 und 400 bar, vorzugsweise bei einer Temperatur über dem Schmelzpunkt des Fettes,
wobei Gewichtsprozent auf das gesamte Produktgewicht bezogen ist und Volumenfraktion auf das gesamte Produktvolumen bezogen ist.

10. Verfahren nach Anspruch 9, wobei während wenigstens einer Stufe des Verfahrens sich die Biopolymer- und Proteinphase trennen.

11. Verfahren nach Anspruch 10, wobei eine Phasentrennung erreicht wird, indem der pH in Schritt (a) bis (e) bei 5,2 bis 8, vorzugsweise 6,0 bis 7,0, gehalten wird.

12. Nahrungsmittelprodukt nach einem der Ansprüche 1 bis 8, wobei das Fett bei einer Temperatur zwischen 0 und 40 °C wenigstens teilweise kristallisiert wird, um die Festigkeit des Öls in der Wasseremulsion mit 5 bis 40 Gew.-% Fett zu erhöhen.

## Revendications

1. Produit alimentaire comprenant une phase huileuse dispersée et une phase aqueuse continue, ledit produit comprenant de 5 à 40 % en poids de matière grasse, ladite matière grasse étant soit une huile végétale soit une huile marine, soit une combinaison des deux ; ou une combinaison de matière grasse laitière et d'huile végétale ou d'huile marine, dans laquelle la quantité de matière grasse laitière est inférieure à 45 % de la matière grasse totale, de 0,05 à 15 % en poids de protéine, de 0,01 à 3 % en poids de biopolymère, dans lequel le biopolymère est choisi dans le groupe constitué par la gomme de caroube, la gomme de guar, la gomme de tara, l'amylopectine, la méthylcellulose, l'alginate, l'amidon, l'amidon modifié, la pectine de haute masse moléculaire ou leurs combinaisons, ledit produit alimentaire ayant une valeur de pH comprise entre 3,7 et 5,8, de préférence entre 4,2 et 5,8, dans lequel le produit alimentaire comprend une phase aqueuse séparée comprenant une phase biopolymére et une phase protéique, dans lequel la fraction en volume de la phase huileuse dispersée divisée par la fraction en volume de la phase protéique est d'au moins 0,2, de préférence d'au moins 0,25, et de façon plus préférée d'au moins 0,3, pouvant être obtenue par le procédé selon l'une quelconque des revendications 9 à 12, où le pourcentage en poids est basé sur le poids total du produit et la fraction en volume est basée sur le volume total du produit.

2. Produit alimentaire selon la revendication 1, dans lequel le biopolymère est présent sous la forme d'une phase biopolymère et dans lequel la fraction en volume de la phase biopolymère se situe entre 0,2 à 0,5.

3. Produit alimentaire selon l'une quelconque des revendications 1 à 2, dans lequel la fraction en volume de la phase huileuse dispersée divisée par la fraction en volume de la phase protéique est d'au moins 1, de façon plus préférée de 1 à 2, et de façon particulièrement préférée de 1,2 à 2.

4. Produit alimentaire selon l'une quelconque des revendications 1 à 3, dans lequel le biopolymère et la protéine sont des composés thermo-dynamiquement incompatibles dans un milieu aqueux.

5. Produit alimentaire selon l'une quelconque des revendications 1 à 4, dans lequel la protéine est choisie dans le groupe constitué par la protéine de lait, la protéine de soja, la protéide de pois ou leurs combinaisons.

6. Produit alimentaire selon l'une quelconque des revendications 1 à 5, dans lequel la quantité de matière grasse se situe entre 15 et 35 % en poids, de façon plus préférée entre 20 et 35 % en poids.

7. Produit alimentaire selon l'une quelconque des revendications 1 à 6, dans lequel la phase grasse une fois isolée du produit est **caractérisée par** une teneur en matière solide valant entre 60 et 75 % à 10°C, entre 10 et 35 % à 20°C et entre 0 et 5 % à 35°C.

8. Produit alimentaire selon la revendication 7, dans lequel la matière grasse est choisie dans le groupe comprenant l'huile de noix de coco, l'huile de noix de coco durcie, les fractions d'huile de palme ou leurs combinaisons.

9. Procédé de préparation d'un produit alimentaire comprenant une phase huileuse dispersée et une phase aqueuse continue, ledit produit comprenant de 5 à 40 en poids de matière grasse, ladite matière grasse étant soit une huile végétale soit une huile marine, soit une combinaison des deux ; ou une combinaison d'une matière grasse laitière et d'une matière grasse végétale ou marine, dans laquelle la quantité de matière grasse laitière est inférieure à 45 % de la matière grasse totale, de 0,05 à 15 % en poids de protéine sous la forme d'une phase protéique, de 0,01 à 3 % en poids de biopolymère, dans lequel le biopolymère est choisi dans le groupe constitué par la gomme de caroube, la gomme de guar, la gomme de tara, l'amylopectine, la méthylcellulose, l'alginate, l'amidon, l'amidon modifié, la pectine de haute masse moléculaire ou leurs combinaisons, ayant une valeur de pH comprise entre 3,7 et 5,8, de préférence entre 4,2 et 5,8, ledit procédé comprenant les étapes :
a) préparation d'une phase aqueuse comprenant protéine et biopolymère ;
b) mélange de la phase aqueuse avec une phase grasse à une température d'environ 40 à 70°C ;
c) chauffage du mélange obtenu à l'étape b) pour le pasteuriser ou le stériliser ;
d) homogénéisation du mélange de l'étape c) à une pression comprise entre 100 et 400 bars, de préférence à une température supérieure à la température de fusion de la matière grasse ;
e) acidification jusqu'à un pH compris entre 3,7 et 5,8, de préférence entre 4,2 et 5,8 ;
f) homogénéisation à une pression comprise entre 100 et 400 bars, de préférence à une température supérieure à la température de fusion de la matière grasse, où le pourcentage en poids est basé sur le poids total du produit et la fraction en volume est basée sur le volume total du produit.

10. Procédé selon la revendication 9, dans lequel durant au moins une étape du procédé la phase biopolymère et la phase protéique se séparent.

11. Procédé selon la revendication 10, dans lequel la séparation des phases est obtenue en maintenant le pH de l'étape a) à l'étape e) dans la plage allant de 5,2 à 8, de préférence de 6,0 à 7,0.

12. Produit alimentaire selon l'une des revendications 1 à 8, dans lequel la matière grasse est au moins partiellement cristallisée à une température comprise entre 0 et 40°C, pour augmenter la fermeté de l'émulsion huile dans l'eau avec 5 à 40 % en poids de matière grasse.
